(19) Europäisches Patentamt
European Patent Office
Office européen des brevets

(11) **EP 1 094 669 B1**

(12) **EUROPEAN PATENT SPECIFICATION**

(45) Date of publication and mention
of the grant of the patent:
**04.06.2008 Bulletin 2008/23**

(51) Int Cl.:
*H04N 7/26* (2006.01)      *G06T 7/20* (2006.01)
*H04N 5/14* (2006.01)

(21) Application number: **00121818.9**

(22) Date of filing: **06.10.2000**

(54) **Method of motion estimation for a digital input video signal**

Bewegungsschätzung für digitale Bildsignale

Procédé d'estimation de mouvement dans un signal vidéo

(84) Designated Contracting States:
**DE FR GB IT**

(30) Priority: **19.10.1999 EP 99250368**

(43) Date of publication of application:
**25.04.2001 Bulletin 2001/17**

(73) Proprietor: **Thomson Licensing**
**92100 Boulogne-Billancourt (FR)**

(72) Inventors:
• **Blawat, Meinolf**
**30161 Hannover (DE)**
• **Winter, Marco**
**30173 Hannover (DE)**

(74) Representative: **Hartnack, Wolfgang**
**Deutsche Thomson-Brandt GmbH**
**European Patent Operations**
**Karl-Wiechert-Allee 74**
**30625 Hannover (DE)**

(56) References cited:
EP-A- 0 410 192       EP-A- 0 446 001
EP-A- 0 661 667       EP-A- 0 732 670
US-A- 5 278 915       US-A- 5 557 341
US-A- 5 635 994       US-A- 5 712 799

**Description**

The invention relates to a method of motion estimation for a digital input video signal, using block matching and sub-sampling.

Background

For motion estimation block matching can be used. An image to be encoded is split into blocks and each of these reference blocks is compared with candidate blocks of the same size within a search window in a preceding or subsequent image. The sum of the absolute values of the differences between the pixel values of the reference block and the corresponding pixel values of the candidate block is calculated for each candidate vector position. The result is called the 'cost function'. The candidate motion vector to which the lowest sum value, i.e. the minimum of the cost function, is related is then taken as the motion vector for the current reference block. Some motion estimation methods use all the pixels (pels) in the reference block and in the search area (full pel full search) in order to find the optimum motion vector. However, these methods require very fast, and thus expensive, hardware.
In order to reduce the required computational power, orthogonal pixel subsampling can be introduced in the block matching process.
The number of incorrectly determined motion vectors for a predetermined level of undersampling can be considerably reduced by using quincunx undersampling instead of orthogonal undersampling. In quincunx undersampling the pixels at the positions omitted in the preceding line or column, respectively, are used in each following line or column, respectively. Fixed quincunx undersampling can be applied either to the reference block or to the search area. EP-A-0 732 670 discloses block matching using such quincunx pixel sub-sampling.
Reduced computational requirements but still high vector accuracy can be achieved using hierarchical block matching. M. Bierling, "Displacement estimation by hierarchical block-matching", University Hanover, 3$^{rd}$ SPIE Symposium on Visual Communications and Image Processing, 9-11 November 1988, Cambridge, USA, describes hierarchical motion estimation based on a motion vector search in search windows having different spatial resolution, starting with a lowpass filtered and subsampled search window.
EP-A-0 661 667 discloses block matching using only MSBs (most significant bits) of pixel values.

Invention

As mentioned above, subsampling of the reference block and of the search window area can be carried out in order to reduce the computational and memory requirements. The omission of columns and/or lines (orthogonal undersampling) can, however, lead to unsatisfactory results since the correct candidate motion vector having the actually smallest cost function value will possibly not be found if it would be located at the position of an omitted line or column. This is a severe drawback because in some applications a motion vector accuracy of even more than ±1 pixel, i.e. for example ±1/2 pixel is required.
The above is basically true for progressive as well as interlace video signals. However, interlace signals require specific considerations because they are already vertically subsampled and a further vertical subsampling applied in the motion estimation processing can deteriorate severely the motion vector quality.
It is one object of the invention to disclose a block matching motion estimation with reduced computational and memory requirements but high vector accuracy, which is particularly suited for interlace video signals. This object is achieved by the method disclosed in claim 1.
The input signal is horizontally and vertically lowpass filtered and horizontally subsampled by a factor of two. The motion vector search operates on the resulting video signal with a horizontal search step size or resolution of two pixels and with a vertical search step size or resolution of one pixel (both resolutions expressed in original signal pixel pattern distances), whereby for calculating the cost function or block matching error in the reference block every second pixel and line only is evaluated (both expressed in original signal pixel pattern distances).
In an optional second block matching stage a fine motion estimation is carried out based on horizontally and vertically half-pel distance interpolated quincunx pixel patterns, leading finally to half-pel resolution motion vectors (expressed in original signal pixel pattern distances).
In principle, the inventive method concerns motion estimation for a digital input video signal and uses block matching of a reference pixel block with corresponding pixel blocks within a search window, and subsampling, with the steps:

-    horizontally and vertically lowpass filtering the input video signal and horizontally 1:2 subsampling the filtered video signal;
-    performing for a current reference block a motion vector search which operates on the filtered and horizontally sub-sampled video signal, with a horizontal search step size or resolution of two pixels and with a vertical search step size or resolution of one pixel, wherein for calculating a current block matching error or cost function value every second pixel and every second line only is evaluated and wherein said search step sizes and the pixel distances for said evaluation are expressed in original video signal pixel pattern distances.

Advantageously a fine motion estimation is carried out subsequently, based on horizontally and vertically half-pel distance interpolated quincunx pixel patterns, which leads finally to half-pel resolution motion vectors, expressed in original signal pixel pattern distances.

Advantageous additional embodiments of the inventive method are disclosed in the respective dependent claims.

Drawings

Embodiments of the invention are described with reference to the accompanying drawings, which show in:

Fig. 1    subsampling processing;
Fig. 2    pixels involved in a first motion estimation stage;
Fig. 3    frame with intermediate pixel positions in the vicinity of a vector landing point;
Fig. 4    pixels involved in a second motion estimation stage;
Fig. 5    motion vectors required for interlace signals.

Exemplary embodiments

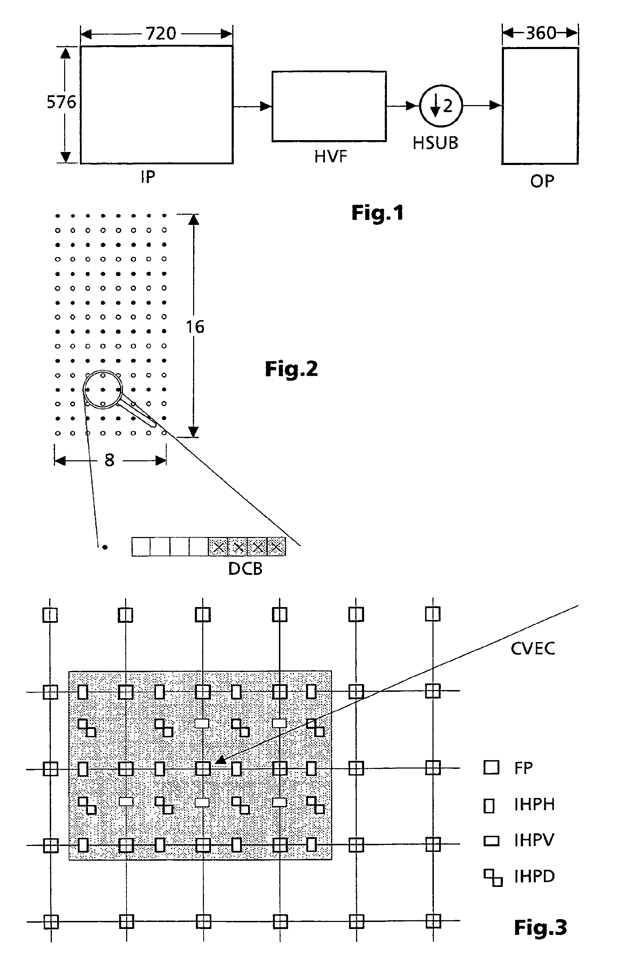

As depicted in Fig. 1 the motion estimation processing starts with horizontal and vertical lowpass filtering HVF of the input pictures IP having originally e.g. 720*576 active pixels per frame. After the horizontal or after the horizontal and vertical lowpass filtering a horizontal subsampling HSUB by a factor of two is performed. The output pictures OP have e.g. 360*576 active pixels per frame in which a reference macroblock may have a size of 8 pixels * 16 lines.

Fig. 2 shows the 8 pixels and 16 lines of a reference macroblock. The search window used in the block matching may have a size of $\pm 32$ (subsampled) pixels horizontally and $\pm 32$ lines vertically. Based on these figures the corresponding reference block pixels are to be compared with corresponding pixels in the search window in the predicted frame at 65 pels*65 lines = 4225 candidate block positions. The candidate block search step size and thus resulting accuracy of the vectors calculated in the first motion estimation stage, i.e. the coarse motion estimation stage, is $\pm 2$ (original) pixels horizontally and $\pm 1$ (original) line vertically. In order to reduce the computational power, the coarse motion estimation is carried out in the following way:

*cost function*

$$\text{mean absolute error} = \sum_{i=0}^{7} \sum_{j=0}^{7} |{}^{4}P_{i,2j} - {}^{4}p_{i,2j}|$$

wherein i = horizontal index, j = vertical index,
$^{4}P$ = e.g. four most significant bits of pixel values in reference block,
$^{4}p$ = e.g. four most significant bits of pixel values in the blocks of the prediction frame.

The pixels used for the cost function accumulation are shown in Fig. 2 as black dots whereas the white dot pixels are disregarded. From the e.g. eight bits per pixel value are e.g. the four lower bits don't care bits DCB. The spatial position of the minimum of the calculated cost function usually has still a deviation from the correct motion vector position. This deviation can be minimised using in a subsequent stage a fine motion estimation.

The operation in the fine motion estimation stage is also based on interpolated values of additional pixel lying between the original pixels in the reference frame. These interpolated pixel values can be derived from the original pixel values using a [1,2,1] filter. Fig. 3 shows a reference frame with intermediate pixel positions in the vicinity of the landing point of a coarse vector CVEC. This vicinity (dark area) includes adjacent original pixels FP, horizontally interpolated half pixels IHPH, vertically interpolated half pixels IHPV, and diagonally interpolated half pixels IHPD, in total 34 pixel positions. Generally, for each macroblock in the prediction frame a search is made in the vicinity of the reference macroblock position within the reference frame, which means that e.g. 34 block positions are searched for the minimum matching error.

It is also possible to search for the position of the reference picture reference block a corresponding block position within the prediction frame, which means that the interpolated pixel values are to be calculated for the prediction picture.

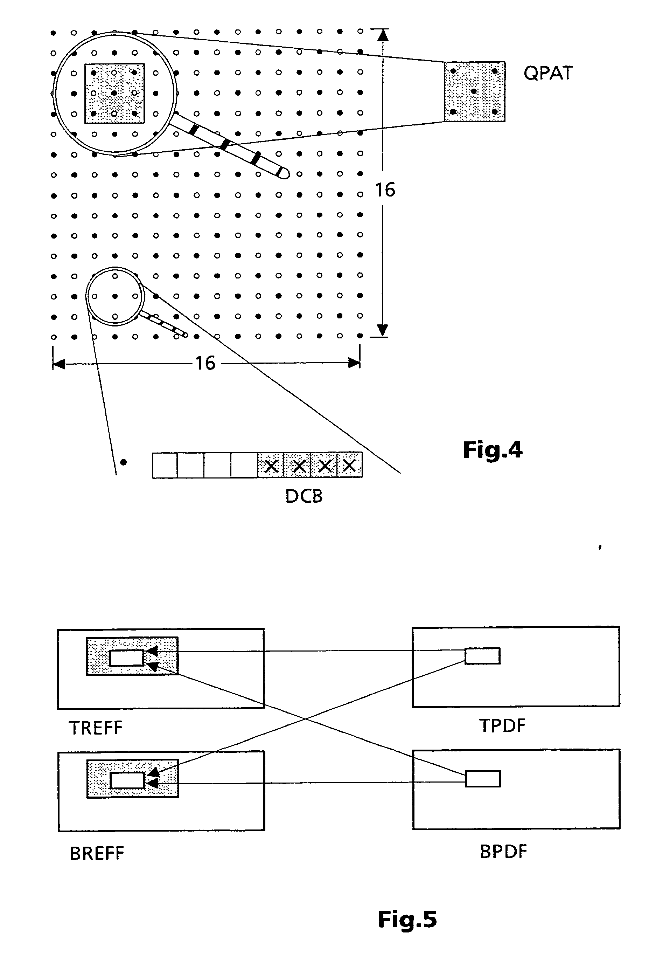

In the fine motion estimation stage the block size is e.g. 16 (original) pixels * 16 (original) lines as depicted in Fig. 4. QPAT shows a quincunx pattern of black-dot pixel values involved in the calculations. The search step size is 1/2 (original) pixel horizontally and 1/2 (original) line vertically. Again, from the e.g. eight bits per pixel value only the e.g. four most significant bits can be used for the cost function calculation accumulations whereas the remaining bits are don't care bits DCB.

The fine motion estimation is carried out in the following way:

*cost function*

$$\text{mae} = \sum_{i=0}^{15} \sum_{j=0}^{15} | {}^4P_{2i+mod(j,2),j} - {}^4P_{2i+mod(j,2),j} |$$

wherein mae = mean absolute error, i = horizontal index in half-pel raster, j = vertical index in half-pel raster, mod(j,2) = 0 if j even and mod(j,2) = 1 if j odd.

The inventive motion estimation improves the subjective picture quality, in particular for interlaced pictures. Fig. 5 shows a top reference field TREFF, a bottom reference field BREFF, a top prediction field TPDF, and a bottom prediction field BPDF from an interlaced picture sequence. Fig. 5 shows the fine motion estimation vector predictions from the prediction fields to the reference fields. The blocks in each field can be predicted using a vector from each of the two following fields.

In the coarse motion estimation and optionally in the fine motion estimation the direction of the search is viceversa.

## Claims

1. Method of motion estimation for a digital input video signal (IP), using block matching of a reference pixel block with corresponding pixel blocks within a search window, thereby using subsampling, **characterised by** the steps:

   - horizontally and vertically lowpass filtering (HVF) the input video signal (IP) and horizontally 1:2 subsampling (HSUB) the filtered video signal;
   - performing for a current reference block a motion vector (CVEC) search which operates on the filtered and horizontally subsampled video signal (OP), with a horizontal search step size or resolution of two pixels and with a vertical search step size or resolution of one pixel, wherein for calculating a current block matching error or cost function value every second pixel and every second line only is evaluated and wherein said search step sizes and the pixel distances for said evaluation are expressed in original video signal pixel pattern distances.

2. Method according to claim 1, wherein subsequently a fine motion estimation is carried out based on horizontally and vertically half-pel distance interpolated quincunx pixel patterns (QPAT), leading finally to half-pel resolution motion vectors, expressed in original signal pixel pattern distances.

3. Method according to claim 1 or 2, wherein said input video signal (IP) is an interlaced video signal.

4. Method according to claim 3, wherein the motion vector for a top field block (TREFF) and/or a bottom field block (BREFF) is calculated using top and bottom field blocks (TPDF, BPDF) of the corresponding adjacent frame.

5. Method according to any of claims 1 to 4, wherein from the pixel values involved in the matching error or cost function value calculations in the coarse and/or in the fine motion estimation stages some least significant bits (DCB) of each pixel value are not considered.

6. Method according to any of claims 1 to 5, wherein the coarse motion estimation is carried out using the following mean absolute error for the cost function:

$$\text{mean absolute error} = \sum_{i=0}^{7} \sum_{j=0}^{7} |{}^{4}P_{i,2j} - {}^{4}p_{i,2j}|,$$

wherein i = horizontal index, j = vertical index, ${}^{4}P$ = e.g. four most significant bits of pixel values in reference block, ${}^{4}p$ = e.g. four most significant bits of pixel values in the blocks of the prediction frame.

7. Method according to any of claims 2 to 5, wherein the coarse motion estimation is carried out using the following mean absolute error for the cost function:

$$\text{mean absolute error} = \sum_{i=0}^{7} \sum_{j=0}^{7} |{}^{4}P_{i,2j} - {}^{4}p_{i,2j}|,$$

wherein i = horizontal index, j = vertical index, ${}^{4}P$ = e.g. four most significant bits of pixel values in reference block, ${}^{4}p$ = e.g. four most significant bits of pixel values in the blocks of the prediction frame.

8. Method according to claim 7, wherein the fine motion estimation is carried out using the following mean absolute error MAE for the cost function:

$$MAE = \sum_{i=0}^{15} \sum_{j=0}^{15} |{}^{4}P_{2i+\text{mod}(j,2),j} - {}^{4}p_{2i+\text{mod}(j,2),j}|$$

wherein i = horizontal index in half-pel raster, j = vertical index in half-pel raster, mod (j, 2) = 0 if j even and mod (j, 2) = 1 if j odd.

**Patentansprüche**

1. Verfahren zur Bewegungsschätzung für ein digitales Video-Eingangssignal (IP) unter Verwendung eines Blockvergleichs eines Referenz-Pixelblocks mit entsprechenden Pixelblöcken innerhalb eines Suchfensters, wobei Unter-Abtastung verwendet wird, **gekennzeichnet durch** die Schritte:

   - horizontale und vertikale Tiefpassfilterung (HVF) des Video-Eingangssignals und horizontale 1:2-Unter-Abtastung (HSUB) des gefilterten Videosignals;
   - Ausführen einer Bewegungsvektor-(CVEC)-Suche für einen aktuellen Referenzblock bei dem gefilterten und horizontal unter-abgetasteten Videosignal (OP) mit einer horizontalen Suchschrittgröße oder Auflösung von zwei Pixeln und mit einer vertikalen Suchschrittgröße von einem Pixel, wobei zur Berechnung eines aktuellen Blockvergleichs- oder Kostenfunktions-Wertes nur jedes zweite Pixel und jede zweite Zeile geschätzt wird, und wobei die Suchschrittgrößen und die Pixelabstände für die Schätzung in ursprünglichen Videosignal-PixelmusterAbständen ausgedrückt werden.

2. Verfahren nach Anspruch 1, bei dem anschließend eine Fein-Bewegungsschätzung auf der Basis von horizontalem und vertikalem Halb-Pixelabstand interpolierten Quincunx-Pixelmustern (QPAT) ausgeführt wird, die schließlich zu Bewegungsvektoren mit Halb-Pixel-Auflösung, ausgedrückt in ursprünglichen Signal-Pixelmusterabständen, führt.

3. Verfahren nach Anspruch 1 oder 2, bei dem das Video-Eingangssignal (IP) ein Zeilensprung-Videosignal ist.

4. Verfahren nach Anspruch 3, bei dem der Bewegungsvektor für einen oberen Halbbildblock (TREFF) und/oder einen unteren Halbbildblock (BREFF) unter Verwendung von oberen und unteren Halbbildblöcken (TPDF, BPDF) des entsprechenden benachbarten Vollbildes berechnet wird.

5. Verfahren nach einem der Ansprüche 1 bis 4, bei dem aus den Pixelwerten, die in die Berechnungen des Vergleichs-Fehler- oder Kostenfunktions-Wertes in den groben und/oder feinen Bewegungs-Schätzungsstufen einbezogen sind, einige Bits mit niedrigster Wertigkeit (DCB) jedes Pixelwertes außer Betracht bleiben.

6. Verfahren nach einem der Ansprüche 1 bis 5, bei dem die grobe Bewegungsschätzung unter Verwendung des folgenden mittleren absoluten Fehlers für die Kostenfunktion durchgeführt wird:

$$\text{mittlerer absoluter Fehler} = \sum_{i=0}^{7} \sum_{j=0}^{7} \left| {}^4P_{i,2j} - 4pi,2j \right|,$$

worin i = horizontaler Index, j = vertikaler Index, $4_P$ = z. B. vier Bits höchster Wertigkeit von Pixelwerten im Referenzblock, $4_p$ = z. B. vier Bits höchster Wertigkeit von Pixelwerten in den Blöcken des vorhergesagten Vollbildes.

7. Verfahren nach einem der Ansprüche 2 bis 5, bei dem die grobe Bewegungsschätzung unter Verwendung des folgenden mittleren absoluten Fehlers für die Kostenfunktion durchgeführt wird:

$$\text{mittlerer absoluter Fehler} = \sum_{i=0}^{7} \sum_{j=0}^{7} \left| {}^4P_{i,2j} - {}^4pi,2j \right|,$$

worin i = horizontaler Index, j = vertikaler Index, $^4P$ = z. B. vier Bits höchster Wertigkeit von Pixelwerten im Referenzblock, $^4p$ = z. B. vier Bits höchster Wertigkeit von Pixelwerten in den Blöcken des vorhergesagten Vollbildes.

8. Verfahren nach Anspruch 7, bei dem die Fein-Bewegungsschätzung unter Verwendung des folgenden mittleren absoluten Fehlers NAE für die Kostenfunktion ausgeführt wird:

$$\text{MAE} = \sum_{i=0}^{15} \sum_{j=0}^{15} \left| {}^4P_{2i+mod(j,\,2),\,j} - {}^4p2i+mod(j,2),j \right|$$

worin i = horizontaler Index in Halb-Pixel-Raster, j = vertikaler Index im Halb-Pixel-Raster, mod(j,2) = 0 wenn j geradzahlig und mod(j,2) = 1, wenn j ungeradzahlig ist.

## Revendications

1. Procédé d'estimation de mouvement dans un signal vidéo d'entrée numérique (IP), utilisant une correspondance de blocs d'un bloc de pixels de référence avec des blocs de pixels correspondants dans une fenêtre de recherche, utilisant ainsi un sous-échantillonnage, **caractérisé par** les étapes suivantes :

   - filtrage passe-bas horizontal et vertical (HVF) du signal vidéo d'entrée (IP) et sous-échantillonnage 1:2 horizontal (HSUB) du signal video filtré ;
   - réalisation, pour un bloc de référence actuel, d'une recherche de vecteur de mouvement (CVEC) qui opère sur le signal vidéo filtré et sous-échantillonné horizontalement (OP), avec une taille ou une résolution d'étape de recherche horizontale de deux pixels et avec une taille ou une résolution d'étape de recherche verticale d'un pixel, où, pour calculer une erreur de correspondance de blocs actuelle ou une valeur de fonction de coût, uniquement un pixel sur deux et une ligne sur deux sont évalués et où lesdites tailles d'étape de recherche et les distances de pixels pour ladite évaluation sont exprimées en distances de motifs de pixels de signaux vidéo d'origine.

2. Procédé selon la revendication 1, où une estimation de mouvement précise est ensuite réalisée en fonction de motifs de pixels en quinconce (QPAT) interpolés sur une distance d'un demi-pixel horizontalement et verticalement, menant finalement à des vecteurs de mouvement à résolution d'un demi-pixel, exprimés en distances de motifs de pixels de signaux d'origine.

3. Procédé selon la revendication 1 ou 2, où ledit signal vidéo d'entrée (IP) est un signal vidéo entrelacé.

4. Procédé selon la revendication 3, où le vecteur de mouvement pour un bloc de champs supérieur (TREFF) et/ou un bloc de champs inférieur (BREFF) est calculé à l'aide de blocs de champs supérieur et inférieur (TPDF, BPDF) de la trame adjacente correspondante.

5. Procédé selon l'une quelconque des revendications 1 à 4, où à partir des valeurs de pixels impliquées dans les calculs d'erreur de correpondance ou de valeur de fonction de coût lors des étapes d'estimation de mouvement approximative et/ou précise, certains bits les moins significatifs (DCB) de chaque valeur de pixel ne sont pas considérés.

6. Procédé selon l'une quelconque des revendications 1 à 5, où l'estimation de mouvement approximative est réalisée à l'aide de l'erreur absolue moyenne suivante pour la fonction de coût :

$$\text{erreur absolue moyenne} = \sum_{i=0}^{7} \sum_{j=0}^{7} |{}^{4}P_{i,2j} - {}^{4}p_{i,2j}| \ ,$$

où i = indice horizontal, j = indice vertical, $^4P$ = par exemple quatre bits les plus significatifs de valeurs de pixels dans un bloc de référence, $^4p$ = par exemple quatre bits les plus significatifs de valeurs de pixels dans les blocs de la trame de prédiction.

7. Procédé selon l'une quelconque des revendications 2 à 5, où l'estimation de mouvement approximative est réalisée à l'aide de l'erreur absolue moyenne suivante pour la fonction de coût :

$$\text{erreur absolue moyenne} = \sum_{i=0}^{7} \sum_{j=0}^{7} |{}^{4}P_{i,2j} - {}^{4}p_{i,2j}| \ ,$$

où i = indice horizontal, j = indice vertical, $^4P$ = par exemple quatre bits les plus significatifs de valeurs de pixels dans un bloc de référence, $^4p$ = par exemple quatre bits les plus significatifs de valeurs de pixels dans les blocs de la trame de prédiction.

8. Procédé selon la revendication 7, où l'estimation de mouvement précise est réalisée à l'aide de l'erreur absolue moyenne MAE suivante pour la fonction de coût :

$$\text{MAE} = \sum_{i=0}^{15} \sum_{j=0}^{15} |{}^{4}P_{2i+mod(j,2),j} - {}^{4}p_{2i+mod(j,2),j}|$$

où i = indice horizontal dans une trame d'un demi-pixel, j = indice vertical dans une trame d'un demi-pixel, mod(j, 2) = 0 si j est pair et mod(j,2) = 1 si j est impair.

**Fig.1**

**Fig.2**

DCB

CVEC

☐ FP

◻ IHPH

▭ IHPV

⌐ IHPD

**Fig.3**

QPAT

16

16

DCB

**Fig.4**

TREFF

TPDF

BREFF

BPDF

**Fig.5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0732670 A
- EP 0661667 A